# EUROPEAN PATENT SPECIFICATION

(11) **EP 0 953 975 B1**
(45) Date of publication and mention of the grant of the patent: **29.03.2006**
(21) Application number: 99303182.2
(22) Date of filing: 23.04.1999
(51) Int. Cl.: G11B 7/135, G02B 5/18, G02B 3/08

(54) **Optical pickup device**
Optische Abtastvorrichtung
Dispositif de lecture optique

(30) Priority: 27.04.1998 KR 9814990
(43) Date of publication of application: 03.11.1999
(73) Proprietor: SAMSUNG ELECTRONICS CO., LTD., Suwon-City, Kyungki-do (KR)
(72) Inventor: Cho, Kun-ho, Suwon-city, Kyungki-do (KR); Yoo, Jang-hoon, Youngdeungpo-gu, Seoul (KR); Lee, Yong-hoon, Suwon-city, Kyungki-do (KR); Lee, Chul-woo, Bundang-gu, Sungnam-city, Kyungki-do (KR); Chung, Chong-sam, Sungnam-city, Kyungki-do (KR)
(74) Representative: Chugg, David John

(56) References cited:
- EP-A- 0 814 468
- WO-A-98/09284
- WO-A-98/58370
- BASS (EDITOR IN CHIEF): "Handbook of Optics, Volume 2 (Devices, Measurement & Properties)" 1995 , MCGRAW-HILL , NEW YORK, USA XP002113479 * page 7.18, paragraph 7.9 * * page 7.21; figure 22 *

## Description

The present invention relates to an optical pickup device, and more particularly, to an optical pickup device which can record/reproduce information at high density by employing a solid immersion lens (SIL).

Document WO-A- 98/58370 is considered to present the closest prior art (under Article 54 (3) EPC, thus it is published after the priority date of the present application but has an earlier priory date itself) and it describes the replacement of a classical SIL by a graded index lens plate.

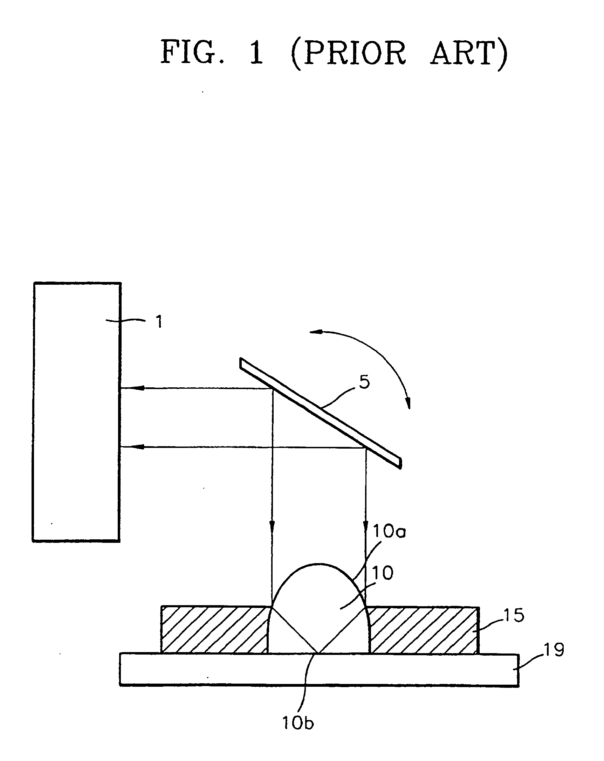

Referring to Figure 1 showing a conventional optical pickup device for recording/reproducing information at high density, light emitted from a light module 1 is incident onto a SIL 10 by a reflection member 5 and is focused by the SIL 10 to form a beam spot on a recording plane of a disk 19.

The light module 1 includes a light source, means for converting a traveling path of incident light and a photodetector for receiving the light reflected from the recording plane of the disk 19.

The reflection member 5 makes fine changes to the incidence angle of incident light so as to perform minute tracking by moving the position of the beam spot formed on the disk 19 little by little.

The SIL 10 is supported by a slider 15 lifting from the disk 19 in the range of several tens of nanometers by an air bearing effect when the disk 19 rotates. An incident surface 10a of the SIL 10 is curved to thus focus incident light whereas a surface 10b of the SIL 10, facing the disk 19, is planar.

The size of the beam spot formed on the disk 19 can be substantially represented as:$\frac{λ}{2 NA}$
where A is the wavelength of light emitted from a light source, and NA is the numerical aperture of the light focusing means. Thus, in order to reduce the size of a beam spot for high-density recording/reproduction, the wavelength of light must be reduced or the numerical aperture must be increased. However, the maximum numerical aperture theoretically available in air is approximately 1.

Since the surface 10b of the SIL 10 is very close to the disk 19, when the refractive index of the SIL 10 is *n*_{*SIL*}, the wavelength of light in the SIL 10 and the disk 19 equals $\frac{λ}{{n}_{SIL}}$ which is compared to equation (1), so that the numerical aperture of the SIL 10 with respect to the wavelength of light emitted from a light source, i.e., λ, is greater than or equal to 1, thereby reducing the size of the beam spot. Here, the SIL 10 has a refractive index which is substantially the same as that of a protective film for protecting the recording plane of the disk 19.

As described above, if the SIL 10 is employed, since the distance between the SIL 10 and the disk 19 is maintained in the range of several tens of nanometers due to an air bearing effect while the disk 19 rotates, the beam spot is not exposed to the air and thus the numerical aperture is greater than or equal to 1, thereby reducing the size of the beam spot.

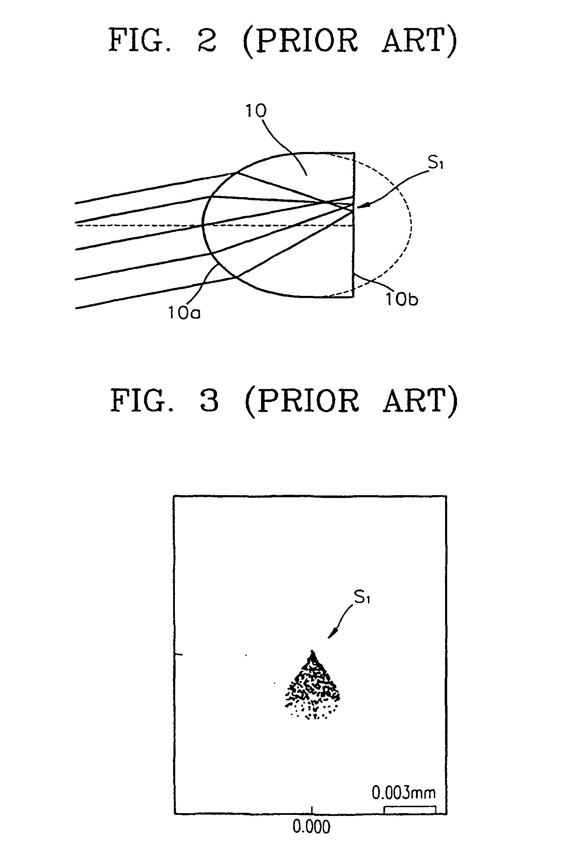

However, as described above, the SIL 10 having one curved surface cannot remove both spherical aberration and coma aberration. In other words, if the incident surface 10a of the SIL 10 is elliptically curved, as shown in Figure 2, the spherical aberration can be removed. However, the elliptically curved surface 10a from which the spherical aberration is removed does not satisfy Abbe's sine condition so that it becomes very sensitive to the tilt of incident light. Thus, the coma aberration is generated at the light S1 which is incident obliquely and is focused by the SIL 10, as shown in Figures 2 and 3. If the incident surface 10a of the SIL 10 is curved hemispherically, the coma aberration is removed but defocusing and spherical aberration still exist.

As described above, since an optical recording/reproducing apparatus employing the SIL 10 is very sensitive to tilt to thus generate coma aberration, it is very difficult to fabricate the same.

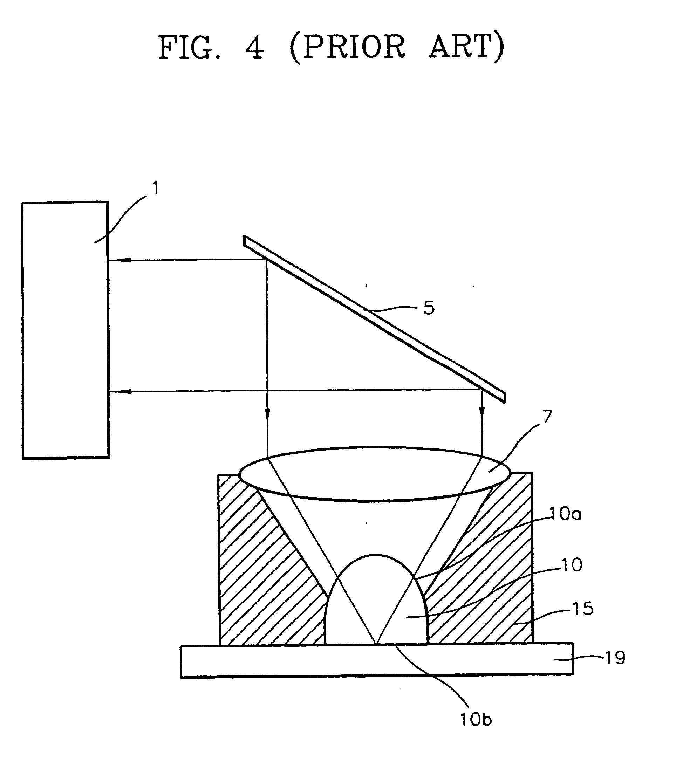

Conventionally, as shown in Figure 4, an optical pickup device having a focusing objective lens 7 separately installed between the light module 1 and the SIL 10 has been proposed. In this case, spherical aberration and coma aberration are removed by the objective lens 7 and the SIL 10 serves to increase the numerical aperture. However, since the optical pickup device having the aforementioned configuration must employ two lenses, that is, the objective lens 7 and the SIL 10, the system becomes complex and bulky.

With a view to solve or reduce the above problems, it is an aim of embodiments of the present invention to provide an optical pickup device which is not sensitive to a tilt of incident light and has a high numerical aperture so as to be capable of high-density recording/reproduction, while being simple and compact by employing a single lens.

According to a first aspect of the the invention, there is provided an optical pickup device including a light module for emitting light and receiving light reflected from a recording medium, and a solid immersion lens (SIL) member disposed in an optical path between the light module and the recording medium, and having a planar surface facing the recording medium and a plurality of elliptically curved surfaces having different radii of curvature so as to be symmetrical with respect to a central axis on its incident surface to which the light is incident from the light module, for focusing the incident light to form a beam spot on a recording plane of the recording medium.

Preferably, amongst the plurality of ellipticially curved surfaces, the radius of curvature of an elliptically curved surface positioned farther away from the central axis is larger than that of an elliptically curved surface positioned closer to that central axis.

Preferably the device further comprises a reflection member installed on the optical path between the light module and the SIL member, for adjusting a tilt of incident light.

Preferably, the device further comprises an optical fiber installed on the optical path between the light module and the SIL member, for transmitting light therebetween.

For a better understanding of the invention, and to show how embodiments of the same may be carried into effect, reference will now be made, by way of example, to the accompanying diagrammatic drawings, in which:
Figure 1 is a schematic diagram illustrating a conventional optical pickup device capable of high-density recording/reproduction;
Figure 2 is a diagram illustrating a solid immersion lens (SIL) employed in the optical pickup device shown in Figure 1;
Figure 3 is a diagram schematically illustrating a beam spot focused by the SIL employed in the optical pickup device shown in Figure 1;
Figure 4 is a schematic diagram illustrating another example of a conventional optical pickup device capable of high-density recording/reproduction;
Figure 5 is a schematic diagram illustrating an optical pickup device capable of high-density recording/reproduction according to an embodiment of the present invention;
Figure 6 is a diagram illustrating a solid immersion lens (SIL) employed in the optical pickup device shown in Figure 5;
Figure 7 is a diagram schematically illustrating a beam spot focused by the SIL employed in the optical pickup device shown in Figure 5; and
Figure 8 is a schematic diagram illustrating an optical pickup device capable of high-density recording/reproduction according to another embodiment of the present invention.

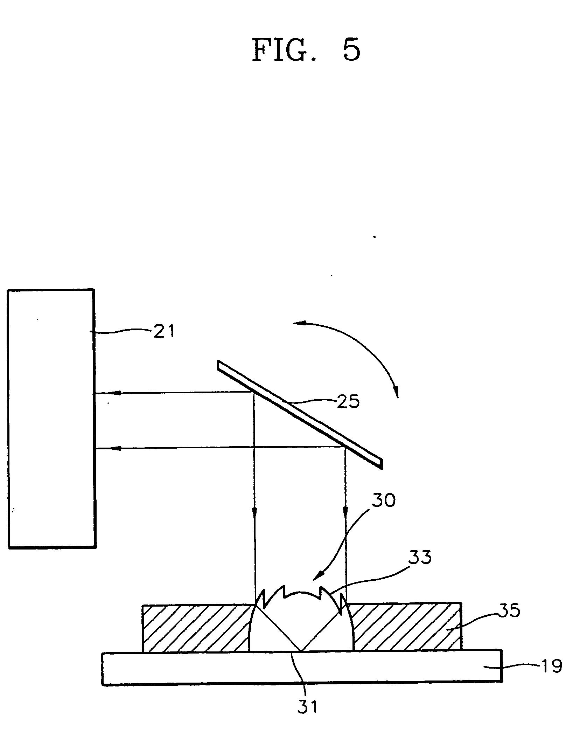

Referring to Figure 5, an optical pickup device according to an embodiment of the present invention includes a light module 21 for emitting light and receiving light reflected from a recording medium 19, and a solid immersion lens (SIL) member 30 disposed in an optical path between the light module 21 and the recording medium 19.

The light module 21 can be a light module employed in a conventional optical pickup device and includes a light source (not shown), means (not shown) for converting the traveling path of incident light, and a photodetector (not shown) for receiving light reflected from the recording medium 19 and having passed through the optical path converting means. The optical path converting means may be a beam splitter or a hologram device.

The SIL member 30 focuses incident light and forms a beam spot on the recording plane of the recording medium 19. An incident surface 33 of the SIL member 30 is formed to be curved for focusing incident light from the light module 21 to land on the recording plane of the recording medium 19. Also, another surface 31 facing the recording medium 19 is made plane.

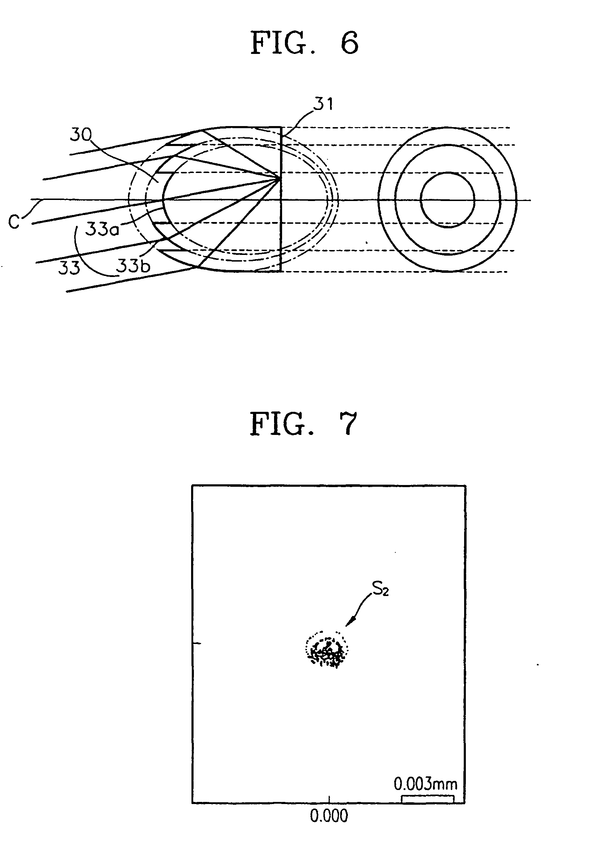

In this embodiment, the incident surface 33, as shown in Figure 6, has a plurality of elliptically curved surfaces 33a and 33b having different radii of curvature so as to be symmetrical with respect to a central axis (c). Preferably, the radii of curvature of the elliptically curved surfaces 33a and 33b become larger as the central axis (c) gets farther.

The SIL member 30 having the elliptically curved surface as described above generates little spherical aberration and offsets coma aberration due to a tilt of incident light. Therefore, as shown in Figure 6, the light which is incident obliquely with respect to the SIL member 30 is focused to form a beam spot S2, as shown in Figure 7.

The SIL member 30 is supported by a slider 35, as shown in Figure 5. The SIL member 30 and the slider 35 are lifted slightly from the recording medium 19 by an air bearing effect when the disk-shaped recording medium 19 rotates. The SIL member 30 has substantially the same refractive index as that of a protective film for protecting the recording plane of the recording medium 19, and the principle of increasing the numerical aperture by employing the SIL member 30 has been described above with reference to Figure 1 and an explanation thereof will be omitted.

Preferably, a reflection member 25 for adjusting a tilt of incident light is additionally provided on an optical path between the light module 21 and the SIL member 30. An incidence angle of light incident onto the SIL member 30 can be changed minutely by rotating the reflection member 25. Thus, minute tracking can be performed by changing the position of the beam spot formed on the recording medium 19 little by little.

According to the present invention, by employing the SIL member 30 having a plurality of elliptically curved surfaces, occurrence of coma aberration can be suppressed by about 1/3, compared to the optical pickup device employing a conventional SIL (10 of Figure 1).

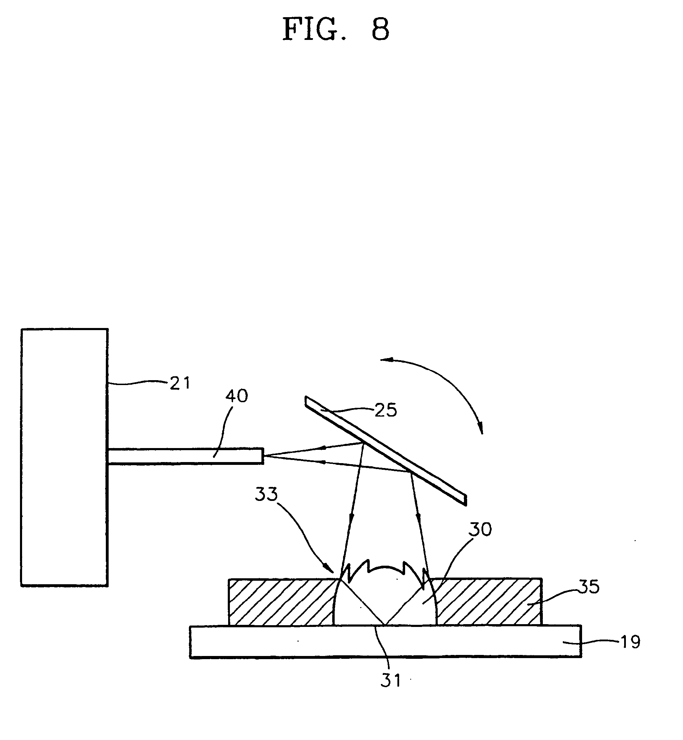

Referring to Figure 8, an optical pickup device according to another embodiment of the present invention further includes an optical fiber 40 installed on an optical path between the light module 21 and the SIL member 30, for transmitting light. The optical fiber 40 is a channel for transmitting light from the light module 21 to the SIL member 30 and from the SIL member 30 to the light module 21. By providing the optical fiber 40, fabrication of an optical recording/reproducing apparatus is facilitated and minute tracking area can be widened.

Since the optical pickup device according to embodiments of the present invention employs a single SIL member having a plurality of elliptically curved surfaces, the overall device is simplified and compact. Also, the optical pickup device is considerably less affected by coma aberration so that it is not sensitive to a tilt of incident light and minute tracking area is increased. Also, since the numeral aperture is greater than or equal to 1, the size of a beam spot can be reduced, thereby enabling high-density recording/reproduction of an information signal.

## Claims

1. An optical pickup device comprising:
a light module (21) for emitting light and receiving light reflected from a recording medium (19); and
a solid immersion lens (SIL) member (30) disposed in an optical path between the light module (21) and the recording medium (19), and having a planar surface (31) facing the recording medium and a plurality of elliptically curved surfaces (33) having different radii of curvature so as to be symmetrical with respect to a central axis (c) on its incident surface to which the light is incident from the light module (21), for focusing the incident light to form a beam spot on a recording plane of the recording medium (19).

2. The optical pickup device according to claim 1, wherein amongst the plurality of ellipticially curved surfaces, the radius of curvature of an elliptically curved surface positioned farther away from the central axis (c) is larger than that of an elliptically curved surface positioned closer to that central axis (c).

3. The optical pickup device according to claim 1 or 2, further comprising a reflection member (25) installed on the optical path between the light module (21) and the SIL member (30), for adjusting a tilt of incident light.

4. The optical pickup device according to claim 1, 2 or 3, further comprising an optical fiber (40) installed on the optical path between the light module (21) and the SIL member (30), for transmitting light therebetween.

## Patentansprüche

1. Optische Abnehmervorrichtung, die umfasst:
ein Lichtmodul (21), das Licht emittiert und von einem Aufzeichnungsmedium (19) reflektiertes Licht empfängt; und
ein SL (solid immersion lens)-Element (30), das auf einem Lichtweg zwischen dem Lichtmodul (21) und dem Aufzeichnungsmedium (19) angeordnet ist und eine plane Fläche (31), die dem Aufzeichnungsmedium zugewandt ist, sowie eine Vielzahl elliptisch gekrümmter Flächen (33) aufweist, die unterschiedliche Krümmungsradien aufweisen, so dass sie in Bezug auf eine Mittelachse (c) an ihrer Auftrefffläche, auf die das Licht von dem Lichtmodul (21) auftrifft, symmetrisch sind, und das das auftreffende Licht fokussiert und einen Strahlfleck auf einer Aufzeichnungsebene des Aufzeichnungsmediums (19) erzeugt.

2. Optische Abnehmervorrichtung nach Anspruch 1, wobei unter der Vielzahl elliptisch gekrümmter Flächen der Krümmungsradius einer elliptisch gekrümmten Fläche, die weiter von der Mittelachse (c) entfernt angeordnet ist, größer ist als der einer elliptisch gekrümmten Fläche, die näher an dieser Mittelachse (c) angeordnet ist.

3. Optische Abnehmervorrichtung nach Anspruch 1 oder 2, die des Weiteren ein Reflexionselement (25) umfasst, das auf dem Lichtweg zwischen dem Lichtmodul (21) und dem SIL-Element (30) installiert ist, um eine Neigung von auftreffendem Licht zu regulieren.

4. Optische Abnehmervorrichtung nach Anspruch 1, 2 oder 3, die des Weiteren eine Lichtleitfaser (40) umfasst, die auf dem Lichtweg zwischen dem Lichtmodul (21) und dem SIL-Element (3) installiert ist, um Licht zwischen ihnen zu übertragen.

## Revendications

1. Dispositif de lecture optique, comprenant :
un module d'éclairage (21) pour émettre de la lumière et recevoir de la lumière réfléchie par un support d'enregistrement (19) ; et
un élément (30) formant lentille à immersion solide(SIL) disposé sur un trajet optique entre le module d'éclairage (21) et le support d'enregistrement (19), et ayant une surface plane (31) en regard du support d'enregistrement et une pluralité de surfaces à courbure elliptique (33) ayant des rayons de courbure différents de manière à être symétriques par rapport à un axe central (c) sur sa surface d'incidence que la lumière vient frapper depuis le module d'éclairage (21), pour concentrer la lumière incidente afin de former un faisceau ponctuel sur un plan d'enregistrement du support d'enregistrement (19).

2. Dispositif de lecture optique selon la revendication 1, dans lequel, parmi la pluralité de surfaces à courbure elliptique, le rayon de courbure d'une surface à courbure elliptique placée plus loin de l'axe central (c) est plus grand que celui d'une surface à courbure elliptique placée plus près de cet axe central (c).

3. Dispositif de lecture optique selon la revendication 1 ou 2, comprenant en outre un élément de réflexion (25) installé sur le trajet optique entre le module d'éclairage (21) et l'élément SIL (30), pour régler une inclinaison de la lumière incidente.

4. Dispositif de lecture optique selon la revendication 1, 2 ou 3, comprenant en outre une fibre optique (40) disposée sur le trajet optique entre le module d'éclairage (21) et l'élément SIL (30) pour transmettre de la lumière entre eux.
